# EUROPÄISCHE PATENTSCHRIFT

(11) **EP 2 011 393 B1**
(45) Veröffentlichungstag und Bekanntmachung des Hinweises auf die Patenterteilung: **24.10.2012**
(21) Anmeldenummer: 07111986.1
(22) Anmeldetag: 06.07.2007
(51) Int. Cl.: A01M 1/02, A01M 1/20

(54) **Insektenfalle**
Insect trap
Piège à insectes

(43) Veröffentlichungstag der Anmeldung: 07.01.2009
(73) Patentinhaber: BASF Agro B.V., Arnhem (NL), Wädenswil-Branch, 8804 Au (CH)
(72) Erfinder: Zühlke, Thomas, 42653 Solingen (DE); Habermann, Michael, 37136 Bernshausen (DE); Hurling, Rainer, 37154 Northeim (DE); Fus, Heinz-Rüdiger, 37079 Göttingen-Holtensen (DE); Goecke, Siegbert, 37194 Wahlsburg (DE); Hoffmeister, Rainer, 38729 Hahausen (DE)
(74) Vertreter: Reitstötter - Kinzebach

(56) Entgegenhaltungen:
- FR-A- 1 571 436
- US-A- 4 133 137
- US-A- 4 505 065
- US-A- 4 788 789

## Beschreibung

Die vorliegende Erfindung betrifft eine Insektenfalle, insbesondere eine Insektenfalle zum Fangen von Fluginsekten, wie beispielsweise Borkenkäfern.

Die in den letzten Jahren und Jahrzehnten beobachtete Erhöhung der Jahresdurchschnittstemperaturen und der Zunahme von extremen Witterungsereignissen, wie orkanartigen Stürmen, haben in der Forstwirtschaft zu verschärften Problemen durch Insektenbefall, insbesondere durch rindenbrütende Käferarten, wie beispielsweise Borkenkäfer geführt.

Die Bekämpfung der Borkenkäfer, wie beispielsweise des Buchdruckers (Ips typographus) oder des Kupferstechers (Pityogenes chalcographus), verlangt vom Forstbetrieb hohe Aufwendungen. Durch die zunehmende Bedeutung einer ökologischen Forstwirtschaft und die entsprechende Zertifizierung nahezu aller Forstbetriebe muss dabei jedoch der Einsatz von ökosystemfremden Stoffen, wie beispielsweise chemischen Pflanzenschutzmitteln, soweit wie möglich verringert und gleichzeitig Störungen des Betriebs durch umweltbedingte Schädigungen des Waldes (sog. abiotische Kalamitäten) vermieden werden.

Zur Begrenzung der Käferdichte unter eine schadenswirksame Schwelle setzen sich zunehmend solche Konzepte durch, bei denen passive Maßnahmen wie Brutraumentzug im Rahmen einer so genannten "Sauberen Wirtschaft" und möglichst zeitnahe Beräumung erkannter Schadflächen bzw. Beseitigung von befallenem Holz, mit einer aktiven Bekämpfung der Schädlinge kombiniert werden.

Bekannte Verfahren zur aktiven Bekämpfung von Borkenkäfern sehen den Einsatz von Fangbäumen, Trichterfallen, Schlitzfallen und von so genannten Fangholzhaufen vor. Während sich Schlitzfallen zwar bei der Überwachung des Schwärmverhaltens (Monitoring) von Borkenkäfern bewährt haben, spielen sie bei der zur aktiven Bekämpfung zwingend erforderlichen lokalen Dichtereduktion der Käferpopulation keine signifikante Rolle. Im Gegensatz dazu haben sich Fangholzhaufen als sehr effektive Maßnahme zur Reduktion der Käferdichte bewährt.

Der Einsatz von Fangholzhaufen ist aber mit Nachteilen verbunden. Zum einen handelt es sich dabei um ein material- und arbeitsintensives Verfahren, das mit relativ hohen Kosten verbunden ist, insbesondere wenn die Käferbekämpfung in einem topographisch schwierigen Gelände, beispielsweise in Steillagen im Bergland, durchgeführt werden soll. Zum anderen ist das Verfahren auch sehr unflexibel, da für Fangholzhaufen schweres, möglichst frisches Holz verwendet wird, das vor Ort nur sehr schwer manipuliert werden kann, so dass eine rasche Anpassung an sich verändernde Bedingungen kaum möglich ist.

Dokument FR1571436 A offenbart eine Insektenfalle mit einem zum Transport zusammenlegbaren Trägergestell, das im Betrieb eine pyramidenförmige Allgemeinform aufweist. Der Erfindung liegt daher das technische Problem zugrunde, ein möglichst effektives Fangsystem für verschiedenste Fluginsekten anzugeben, das kostengünstig hergestellt und mit geringem Personaleinsatz auch in topographisch anspruchsvollem Gelände eingesetzt werden kann.

Gelöst wird dieses technische Problem durch die Insektenfalle mit den Merkmalen des vorliegenden Anspruchs 1. Vorteilhafte Weiterbildungen der erfindungsgemäßen Insektenfalle sind Gegenstände der abhängigen Patentansprüche.

Die Erfindung betrifft demnach eine Insektenfalle, insbesondere für Borkenkäfer, die ein Trägergestell und einen das Trägergestell im wesentlichen vollständig umgebenden Mantel, der zumindest auf seiner Außenfläche mit einem Insektizid behandelt ist , umfasst. Das Trägergestell weist im Betrieb eine pyramidenförmige Allgemeinform auf und umfasst wenigstens drei Standbeine, bevorzugt genau drei Standbeine, so dass auch im unebenen Gelände eine stabile Aufstellung der Insektenfalle gewährleistet ist. Die Standbeine können zum Transport zusammengelegt werden, was den Platzbedarf der Insektenfalle minimiert und auch im unwegsamen Gelände einen problemlosen Transport ermöglicht. Die Insektenfalle weist wenigstens eine Öffnung zur Abgabe eines flüchtigen Lockmittels an die Umgebung auf. Durch das Lockmittel werden die Insekten zu der Insektenfalle hingelockt und landen auf der mit dem Insektizid behandelten Außenfläche des Mantels. Dort nehmen sie das Insektizid auf und werden rasch abgetötet. Der Mantel ist dabei so auf dem Trägergestell angeordnet, dass die Insekten nur auf mit Insektizid behandelten Flächen landen können.

Der Mantel der Insektenfalle kann entweder vorab vom Hersteller mit Insektizid behandelt werden oder er kann unbehandelt sein und nach Aufstellen der Falle vom Anwender mit einem geeigneten Insektizid imprägniert werden. Ferner kann man vorsehen, den Mantel in regelmäßigen Abständen mit frischem Insektizid zu behandeln.

Als Insektizid kann jedes zur Bekämpfung des zu fangenden Insekts zugelassene Insektizid verwendet werden. Zur Bekämpfung des Borkenkäfers können beispielsweise die Wirkstoffe Cypermethrin, Deltamethrin oder Esfenvalerat verwendet werden.

Vorzugsweise ist die Öffnung zur Abgabe des flüchtigen Lockmittels an der Spitze der Insektenfalle vorgesehen. Gemäß einer bevorzugten Ausführungsform weist das Trägergestell dazu eine pyramidenstumpfförmige Spitze auf, die von einem zentralen Hohlkörper gebildet wird, an dessen Außenseite die Standbeine montiert sind. Entsprechend weist der Mantel eine Öffnung auf, deren Lage im wesentlichen deckungsgleich mit dem zentralen Hohlkörper des Gestells ist.

Damit das Trägergestell der erfindungsgemäßen Insektenfalle zum Transport leicht zusammengelegt werden kann, kann man gemäß einer Variante der Erfindung vorsehen, dass die Standbeine lösbar an dem Hohlkörper montiert sind. Dazu können beispielsweise Steckbuchsen vorgesehen sein, die fest an dem Hohlkörper montiert sind und in welche die Standbeine lösbar gesteckt werden können. Die Verbindung von Steckbuchse und zugehörigem Standbein kann reibschlüssig erfolgen. Alternativ oder zusätzlich kann auch eine dem Fachmann an sich bekannte Rastverbindung vorgesehen sein. Beispielsweise können die Standbeine an ihren Enden federbelastete Sicherungsnasen an ihren Enden aufweisen, die in entsprechende Öffnungen in den Steckbuchsen einrasten. Gemäß einer anderen Variante sind die Standbeine mittels Scharnieren schwenkbar an dem Hohlkörper angelenkt. Zum Transport liegen die Standbeine in diesem Fall im Wesentlichen parallel zueinander und können beim Aufstellen der Insektenfalle zur Bildung der pyramidenförmigen Anordnung ausgeklappt werden.

In beiden Fällen können zwischen benachbarten Standbeinen und/oder zwischen dem Standbein und dem Hohlkörper zusätzliche Querstreben zur Versteifung und Stabilisierung des Gestells vorgesehen sein.

Die Standbeine können auch als Teleskopbeine ausgebildet sein, was insbesondere in Hanglagen eine stabilere Aufstellung der erfindungsgemäßen Insektenfalle ermöglicht.

Ferner können an den unteren Enden der Standbeine geeignete Befestigungsmittel zur Verankerung der Insektenfalle am Boden vorgesehen sein. Bei diesen Befestigungsmitteln kann es sich beispielsweise um fest mit den Standbeinen verbundene Ösen handeln, in welche Heringe eingeschlagen werden können. Alternativ können Haken vorgesehen sein, an welchen Zugschnüre befestigt werden, die wiederum mittels Heringen am Boden verankert werden.

Gemäß einer bevorzugten Ausführungsform der erfindungsgemäßen Insektenfalle ist der Hohlkörper des Trägergestells als längliches, zylindrisches Kaminrohr ausgebildet, das ins Innere der Insektenfalle hinabreicht. Da zwischen Unterkante des Mantels und den Boden, auf welchem die Insektenfalle aufgestellt ist, üblicherweise ein kleiner Luftspalt verbleibt, entsteht durch den Hohlzylinder ein Kamineffekt, welcher die Abgabe des Lockmittels an die Umgebung begünstigt. Dieser Kamineffekt kann verstärkt werden, wenn in den Seitenflächen des Mantels zusätzliche Belüftungsöffnungen ausgespart sind. In diesem Fall kann der Mantel auch mehr oder weniger dicht mit dem Boden abschließen. Die zusätzlichen Belüftungsöffnung verstärken einerseits den Kamineffekt, ermöglich je nach Windverhältnissen aber auch eine Abgabe des Lockmittels an die Umgebung, was die Abdunstung des Lockmittels weiter verbessert.

Der Mantel kann fest auf dem Trägergestell montiert sein. Erfindungsgemäß ist der Mantel jedoch lösbar auf dem Trägergestell montiert. Zur lösbaren Befestigung des Mantels auf dem Trägergestell können alle geeigneten, an sich bekannten Mittel, wie beispielsweise in der Innenseite des Mantels vorgesehene Klettbänder, Führungslaschen und ähnliches vorgesehen sein. Man kann auch vorsehen, dass die zentrale Öffnung des Mantels von einem schlauchartigen Abschnitt gebildet wird, der beim Aufstellen der Insektenfalle ins Innere des Hohlkörpers bzw. Hohlzylinders gestülpt wird, was einerseits den Halt des Mantels auf der Insektenfalle verbessert und andererseits gewährleistet, dass auch direkt in die zentrale Öffnung einfliegende Käfer mit dem Insektizid in Kontakt kommen. Der Zuschnitt des Mantels ist dabei so gewählt, dass der Mantel im aufgestellten Zustand der Insektenfalle straff an dem Trägergestell anliegt.

Als Material für die Hülle kann jedes zur Beschichtung mit Insektizid geeignete Material, beispielsweise Strukturbaumwolle oder Kunststoff verwendet werden. Bevorzugt ist der Mantel in einer dunklen Farbe gehalten, was dem Borkenkäfer den Eindruck eines potentiell bruttauglichen Materials vermittelt und so die Fangquote erhöht.

Als Lockmittel kann frisch geschlagenes Holz verwendet werden, das im Inneren der Insektenfalle angeordnet wird. Vorzugsweise werden als Lockmittel artspezifische natürliche oder synthetische, insbesondere synthetische naturidentische Aggregationspheromone verwendet. Pheromone haben als Mittel zur Insektenbekämpfung im Waldschutz zunehmende Bedeutung erlangt. Zahlreiche Pheromone, die als Lockstoffe für Schädlinge im Forst, z.B. Borkenkäfer wirken, sind bekannt. Ein beispielsweise als Lockstoffstoff-Kombination für den Kupferstecher geeignetes Pheromon ist eine Mischung von 2-Ethyl-1,6-dioxaspiro[4,4]nonan mit 2,4-Decadiencarbonsäuremethylester und 2-Methylbut-3-in-1-ol oder 2-Methylbut-3-en-1-ol. Für eine hohe Attraktivität müssen alle Bestandteile dieser Mischung in ausreichender Menge zugegen sein, da der Kupferstecher auf das Fehlen bereits eines dieser Bestandteile sehr empfindlich reagiert, was hinsichtlich der Fängigkeit der Fallen problematisch ist.

Üblicherweise erfolgt die Abgabe der Pheromone über einen Dispenser in Form eines Folienbeutels aus Polyethylen, in dem sich ein zelluloseartiger, saugfähiger Stoff befindet, der mit dem das (aus mindestens drei Wirkstoffen bestehende) Pheromon getränkt ist. Derartige Dispenser sind unter der Handelsbezeichnung Chalcoprax® DISP von der Fa. BASF Aktiengesellschaft erhältlich. Die Abgabe des Pheromon erfolgt mittels Diffusion durch die Polyethylenfolie. Geeignete Dispenser sind beispielweise in den Patentanmeldungen EP-A-0 413 325 und WO-A-2006058729 der Anmelderin beschrieben. Der Pheromondispenser ist vorzugsweise an dem Trägergestell montiert. Dazu kann in dem Kaminrohr eine Querstrebe vorgesehen sein, an welcher der Phermondispenser mit einem Faden aufgehängt werden kann.

Die erfindungsgemäße Insektenfalle wird im Folgenden anhand einer in der beigefügten Zeichnung dargestellten bevorzugten Ausführungsform näher erläutert. In der Zeichnung zeigt:

Das Trägergestell der erfindungsgemäßen Insektenfallen kann aus Metall oder Kunststoff oder aus einer Kombination dieser Materialien bestehen. Als Metall ist auf Grund des geringen Gewichtes insbesondere Aluminium geeignet.
- Figur 1: eine schematische Seitenansicht einer bevorzugten Ausführungsform der erfindungsgemäßen Insektenfalle im aufgestellten Zustand;
- Figur 2: eine Seitenansicht des Gestells der Insektenfalle der Figur 1;
- Figur 3: eine schematische Darstellung des Gestells der Figur 2 im Transportzustand; und
- Figur 4: eine schematische Teildarstellung einer Variante des Gestells der Figuren 2 und 3.

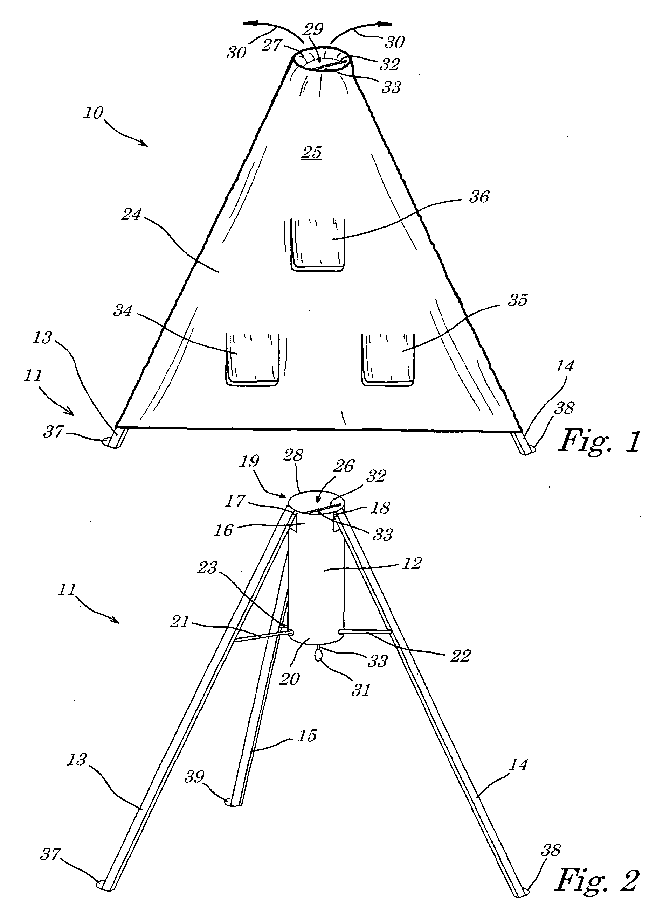

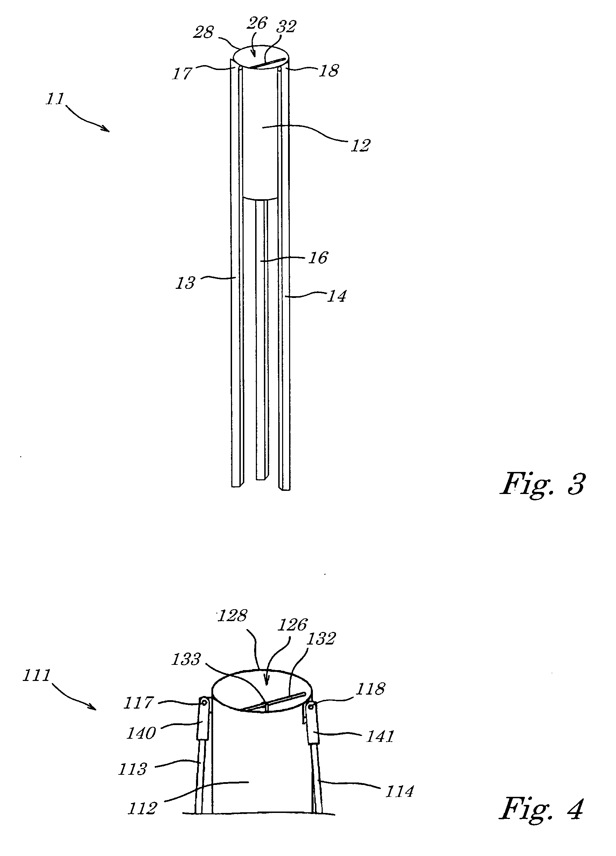

In Figuren 1 und 2 ist eine insgesamt mit der Bezugsziffer 10 bezeichnete erste Ausführungsform der erfindungsgemäßen Insektenfalle dargestellt, die ein Trägergestell 11 umfasst, das aus einem Hohlzylinder 12 besteht, an dessen Außenmantel drei Standbeine 13, 14, 15 schwenkbar angelenkt sind. Im dargestellten Beispiel sind die Enden der Standbeine 13, 14 und 15 jeweils über im Bereich des oberen Endes 16 des Hohlzylinders 12 montierte Scharniere 17, 18 und 19 mit dem Hohlzylinder verbunden. Eine Variante der Befestigung der Standbeine am Hohlzylinder wird weiter unten im Zusammenhang mit Figur 4 beschrieben. Zur Stabilisierung des aufgestellten Gestells 11 sind im Bereich des unteren Endes 20 des Hohlzylinders 12 Stützstreben 21, 22, 23 vorgesehen, die den Hohlzylinder mit den drei Standbeinen 13, 14, 15 verbinden. Die Stützstreben können teleskopartig verlängerbar sein oder mehrere axial beabstandete Durchgangsbohrungen für Flügelmuttern oder ähnliche Befestigungsmittel aufweisen, so dass jedes Standbein in verschiedenen Winkeln zum Hohlzylinder fixiert werden kann, um beispielsweise Bodenunebenheiten oder Hanglagen bei der Aufstellung der Insektenfalle 10 auszugleichen. Auch die Standbeine 13, 14, 15 können zu diesem Zweck teleskopartig verlängerbar ausgebildet sein. Alternativ kann jedes Teleskopbein modular aus mehreren Rohrteilen aufgebaut sein, die je nach gewünschter Länge ineinander gesteckt werden.

Das Trägergestell 11 ist von einem im wesentlichen pyramidenförmig zugeschnittenen Mantel 24 umgeben, der eine Landefläche für die zur Falle gelockten Fluginsekten bildet. Der Mantel 24 ist zumindest auf seiner Außenfläche 25 mit einem Insektizid beschichtet. Im dargestellten Beispiel besteht der Mantel 24 aus einem dunkel gefärbten, insektizidgetränkten Baumwollgewebe. Im Bereich der oberen Öffnung 26 des Hohlzylinders 12 weist der Mantel 24 einen schlauchartigen Fortsatz 27 auf, der über die Oberkante 28 des Hohlzylinders 12 ins Innere des Hohlzylinders gestülpt wird und eine mit der Öffnung 26 des Hohlzylinders 12 zusammenfallende Öffnung 29 bildet. In der Praxis wird der schlauchartige Fortsatz meist tiefer in den Hohlzylinder hinabreichen, als dies in Figur 1 gezeigt ist, damit sichergestellt wird, dass auch die in die Öffnung 26, 29 hineinfliegenden Käfer mit dem Insektizid in Kontakt kommen.

Vorzugsweise ordnet man im Inneren der Insektenfalle 10 flüchtige Lockstoffe an, welche die Insekten zu der Falle locken, wo sie dann mit dem Insektizid in Kontakt kommen. Über die Öffnung 26, 29 können die Lockstoffe aus dem Inneren der Insektenfalle 10 in die Umgebung entweichen, wie dies in Figur 1 durch die Pfeile 30 angedeutet ist. Als Lockstoff wird vorzugsweise ein im Inneren der Insektenfalle 11 angeordneter Pheromonspender 31 verwendet. Der Pheromonspender 31 kann in der dargestellten Ausführungsform beispielsweise unterhalb des Hohlzylinders 12 auf den Waldboden gelegt werden. Vorzugsweise wird der Pheromonspender 31 jedoch im Hohlzylinder 12 oder, wie in der dargestellten Ausführungsform, direkt unterhalb des Hohlzylinders 12 aufgehängt. Dazu kann im Inneren des Hohlzylinders 12 in der Nähe von dessen oberem Ende 16 eine Querstrebe 32 montierst sein, an welcher der Pheromonspender 31 beispielsweise mittels eines Drahtes oder Fadens 33 aufgehängt wird. Damit ist der Pheromonspender 31 leicht von oben zugänglich und kann bei Bedarf ausgetauscht werden, ohne dass die Falle 10 zerlegt oder zumindest der Mantel 24 abgenommen werden müsste.

Die Insektenfalle kann über frischen Baumstümpfen oder frisch geschlagenen Holzscheiten errichtet werden, so dass die austretenden flüchtigen Harzbestandteile das Anlocken der Käfer begünstigen.

Der im oberen Bereich des Gestells 11 angeordnete Hohlzylinder 12 wirkt wie ein Kamin und dient daher zu einer effektiven Abgabe von Lockstoffen. Zur Verbesserung der Kaminwirkung sind in den Seitenflächen des Mantels 14 Belüftungsöffnungen 34, 35, 36 ausgespart. Ohne eine den Kamineffekt induzierende Thermik kann das Pheromon auch durch die Belüftungsklappen abdunsten, insbesondere wenn der Pheromonspender 31 einige Zentimeter unterhalb der Unterkannte des Hohlzylinders 12 frei im Inneren der Insektenfalle in der Luft hängt. Die Belüftungsöffnungen verbessern außerdem die Stabilität der Insektenfalle im Falle eines Sturms, da die auf die Seitenflächen wirkende Windkraft verringert wird.

Die Standbeine 13, 14, 15 weisen im Fußbereich Haltelaschen 37, 38, 39 auf, die zur Befestigung des Gestells am Boden, beispielsweise mit Hilfe von (nicht dargestellten) Heringen oder Zeltnägeln, dienen. Die Haltelaschen können starr mit den Standbeinen verbunden oder zum Transport anklappbar oder abnehmbar ausgebildet sein.

Figur 3 zeigt das Gestell der Figur 1 im zusammengeklappten Zustand. Die Standbeine 13, 14, 15 können beispielsweise als ca. 200 cm lange Aluminiumrohre ausgebildet sein. Als Hohlzylinder kann ein Metall- oder Kunststoffrohr, beispielsweise ein Polypropylenrohr mit 100 mm Durchmesser und einer Länge von 200 bis 300 cm verwendet werden. Ein solches Gestell wiegt dann weniger als 1 kg, so dass das Gesamtgewicht einer solchen Insektenfalle je nach verwendetem Mantelmaterial zwischen 2 und 3 kg beträgt. Um eine Kontamination des Anwenders mit Insektizid zu vermeiden, kann zusammengeklappte Gestell 11 zusammen mit dem insektizidgetränkten Mantel 24 in eine kunststoffbeschichtete Transporthülle geschoben werden, so dass das gesamte Fangsystem auch in unwegsamem Gelände leicht über der Schulter transportiert werden kann.

Figur 4 zeigt eine Variante 111 des Gestells 11 der Figuren 2 und 3 in einer gegenüber den Figuren 1 bis 3 vergrößerten Ausrissdarstellung. Bauteile, die denjenigen der Ausführungsform der Figuren 2 und 3 entsprechen, sind mit den gleichen, aber jeweils um 100 erhöhten Bezugsziffern bezeichnet und werden hier nicht nochmals erläutert. Bei der Variante der Figur 4 sind die Scharniere 117, 118 nicht fest mit den Standbeinen 113, 114 verbunden, sondern weisen Steckhülsen 140, 141 auf, in welche die Standbeine 113, 114 kraftschlüssig hineingepresst werden können. Anstelle der dargestellten schwenkbaren Befestigung der Hülsen 140, 141, können die Hülsen auch ohne die Scharniere 117, 118 an dem Hohlzylinder 112 befestigt werden. Die Hülsen 140, 141 können beispielsweise unter einem fest vorgegebenen Winkel mit dem Hohlzylinder 112 verschweißt, verklebt oder verschraubt werden.

## Patentansprüche

1. Insektenfalle, insbesondere für Borkenkäfer, mit
einem Trägergestell (11;111), das im Betrieb eine pyramidenförmige Allgemeinform aufweist und wenigstens drei Standbeine (13,14,15;113,114,115) umfasst, die zum Transport zusammenlegbar sind, und
einem das Trägergestell (11;111) im Wesentlichen vollständig umgebenden Mantel (24), der lösbar auf dem Trägergestell (11; 111) montiert ist und der zumindest auf seiner Außenfläche (25) mit einem Insektizid behandelt ist, wobei in dem Mantel (24) wenigstens eine Öffnung (29) zur Abgabe eines flüchtigen im Inneren der Insektenfalle angeordneten Lockmittels (31) an die Umgebung ausgespart ist.

2. Insektenfalle gemäß Anspruch 1, **dadurch gekennzeichnet, dass** die wenigstens eine Öffnung (29) des Mantels (24) an der Spitze der Insektenfalle vorgesehen ist.

3. Insektenfalle gemäß einem der Ansprüche 1 oder 2, **dadurch gekennzeichnet, dass** der Mantel (24) eine vom Boden beabstandete Unterkante aufweist.

4. Insektenfalle gemäß einem der Ansprüche 1 bis 3, **dadurch gekennzeichnet, dass** das Trägergestell (11;111) eine pyramidenstumpfförmige Spitze aufweist, die von einem zentralen Hohlkörper (12;112) gebildet wird, an dessen Außenseite die Standbeine (13,14,15;113,114,115) montiert sind.

5. Insektenfalle gemäß Anspruch 4, **dadurch gekennzeichnet, dass** die Standbeine (13,14,15;113,114,115) lösbar an dem Hohlkörper (12;112) montiert sind.

6. Insektenfalle gemäß Anspruch 5, **dadurch gekennzeichnet, dass** die Standbeine (113,114,115) durch Steckverbindungen an dem Hohlkörper (112) montiert sind.

7. Insektenfalle gemäß Anspruch 4, **dadurch gekennzeichnet, dass** die Standbeine (13,14,15;113,114,115) schwenkbar an dem Hohlkörper (12,112) angelenkt sind.

8. Insektenfalle gemäß einem der Ansprüche 4 bis 7, **dadurch gekennzeichnet, dass** die Standbeine (13,14,15;113,114,115) durch Querstreben (21,22,23) mit dem Hohlkörper (12,112) verbunden sind.

9. Insektenfalle gemäß einem der Ansprüche 1 bis 8, **dadurch gekennzeichnet, dass** die Standbeine (13,14,15;113,114,115) als Teleskoprohre ausgebildet sind.

10. Insektenfalle gemäß einem der Ansprüche 1 bis 9, **dadurch gekennzeichnet, dass** die Standbeine (13,14,15;113,114,115) Befestigungsmittel (37,38,39) zur Verankerung auf dem Boden aufweisen.

11. Insektenfalle gemäß einem der Ansprüche 4 bis, 8, oder gemäß einem der Ansprüche 9 bis 10 zusammen mit Anspruch 4, **dadurch gekennzeichnet, dass** der Hohlkörper als zylindrisches Kaminrohr (12,112) ausgebildet ist.

12. Insektenfalle gemäß einem der Ansprüche 1 bis 11, **dadurch gekennzeichnet, dass** der Mantel (24) wenigstens eine seitliche Belüftungsöffnung (34,35,36) umfasst.

13. Insektenfalle gemäß einem der Ansprüche 1 bis 12, **dadurch gekennzeichnet, dass** der Mantel (24) mit einer dunklen Farbe eingefärbt ist.

14. Insektenfalle gemäß einem der Ansprüche 1 bis 13, **dadurch gekennzeichnet, dass** das Lockmittel einen Pheromondispenser (31) umfasst.

15. Insektenfalle gemäß Anspruch 14, **dadurch gekennzeichnet, dass** der Pheromondispenser (31) in dem Trägergestell (11) montiert ist.

## Claims

1. An insect trap, in particular for bark beetles, with
a support frame (11; 111) which has a pyramid-shaped general shape during operation and comprises at least three standing legs (13, 14, 15; 113, 114, 115) which can be collapsed for transportation, and
a casing (24) which essentially completely surrounds the support frame (11; 111), is mounted releasably on the support frame (11; 111) and is treated at least on its outer surface (25) with an insecticide, with at least one opening (29) for dispensing a volatile attractant (31), which is arranged in the interior of the insect trap, to the surroundings being recessed in the casing (24).

2. The insect trap according to claim 1, wherein the at least one opening (29) of the casing (24) is provided at the tip of the insect trap.

3. The insect trap according to either of claims 1 and 2, wherein the causing (24) has a lower edge at a distance from the ground.

4. The insect trap according to one of claims 1 to 3, wherein the support frame (11; 111) has a tip which is in the shape of a truncated pyramid and is formed by a central hollow body (12; 112), on the outside of which the standing legs (13, 14, 15; 113, 114, 115) are fitted.

5. The insect trap according to claim 4, wherein the standing legs (13, 14, 15; 113, 114, 115) are fitted releasably on the hollow body (12; 112).

6. The insect trap according to claim 5, wherein the standing legs (113, 114, 115) are fitted on the hollow body (112) by plug-in connections.

7. The insect trap according to claim 4, wherein the standing legs (13, 14, 15; 113, 114, 115) are coupled pivotably to the hollow body (12, 112).

8. The insect trap according to one of claims 4 to 7, wherein the standing legs (13, 14, 15; 113, 114, 115) are connected to the hollow body (12, 112) by transverse struts (21, 22, 23).

9. The insect trap according to one of claims 1 to 8, wherein the standing legs (13, 14, 15; 113, 114, 115) are designed as telescopic tubes.

10. The insect trap according to one of claims 1 to 9, wherein the standing legs (13, 14, 15; 113, 114, 115) have fastening means (37, 38, 39) for anchoring on the ground.

11. The insect trap according to one of claims 4 to 8, or according to one of claims 9 to 10 in conjunction with claim 4, wherein the hollow body is designed as a cylindrical chimney pipe (12, 112).

12. The insect trap according to one of claims 1 to 11, wherein the casing (24) comprises at least one lateral ventilation opening (34, 35, 36).

13. The insect trap according to one of claims 1 to 12, wherein the casing (24) is colored with a dark color.

14. The insect trap according to one of claims 1 to 13, wherein the attractant comprises a pheromone dispenser (31).

15. The insect trap according to claim 14, wherein the pheromone dispenser (31) is fitted in the support frame (11).

## Revendications

1. Piège à insectes, en particulier pour le bostryche typographe, comportant
- une ossature de support (11; 111), qui présente en service la forme générale d'une pyramide et comprend au moins trois pieds (13, 14, 15; 113, 114, 115), qui peuvent se replier pour le transport, et
- un manteau (24) enveloppant pratiquement entièrement l'ossature de support (11; 111), qui est monté de façon séparable sur l'ossature de support (11; 111) et qui est traité au moins sur sa face extérieure (25) avec un insecticide, dans lequel au moins une ouverture (29) est découpée dans le manteau (24) pour diffuser dans l'environnement un appât volatil (31) disposé à l'intérieur du piège à insectes.

2. Piège à insectes selon la revendication 1, **caractérisé en ce que** ladite au moins une ouverture (29) du manteau (24) est prévue à la pointe du piège à insectes.

3. Piège à insectes selon l'une quelconque des revendications 1 ou 2, **caractérisé en ce que** le manteau (24) présente un bord inférieur espacé du sol.

4. Piège à insectes selon l'une quelconque des revendications 1 à 3, **caractérisé en ce que** l'ossature de support (11; 111) présente une pointe en forme de tronc de pyramide, qui est formée par un corps creux central (12; 112), sur le côté extérieur duquel les pieds (13, 14, 15; 113, 114, 115) sont montés.

5. Piège à insectes selon la revendication 4, **caractérisé en ce que** les pieds (13, 14, 15; 113, 114, 115) sont montés de façon séparable sur le corps creux (12; 112).

6. Piège à insectes selon la revendication 5, **caractérisé en ce que** les pieds (113, 114, 115) sont montés sur le corps creux (112) par des assemblages à emboîtement.

7. Piège à insectes selon la revendication 4, **caractérisé en ce que** les pieds (13, 14, 15; 113, 114, 115) sont articulés de façon pivotante sur le corps creux (12; 112).

8. Piège à insectes selon l'une quelconque des revendications 4 à 7, **caractérisé en ce que** les pieds (13, 14, 15; 113, 114, 115) sont reliés au corps creux (12; 112) par des entretoises (21, 22, 23).

9. Piège à insectes selon l'une quelconque des revendications 1 à 8, **caractérisé en ce que** les pieds (13, 14, 15; 113, 114, 115) sont formés par des tubes télescopiques.

10. Piège à insectes selon l'une quelconque des revendications 1 à 9, **caractérisé en ce que** les pieds (13, 14, 15; 113, 114, 115) présentent des moyens de fixation (37, 38, 39) pour l'ancrage sur le sol.

11. Piège à insectes selon l'une quelconque des revendications 4 à 8, ou selon l'une quelconque des revendications 9 à 10 conjointement à la revendication 4, **caractérisé en ce que** le corps creux est réalisé sous la forme d'un tube de cheminée cylindrique (12, 112).

12. Piège à insectes selon l'une quelconque des revendications 1 à 11, **caractérisé en ce que** le manteau (24) comporte au moins une ouverture d'aération latérale (34, 35, 36).

13. Piège à insectes selon l'une quelconque des revendications 1 à 12, **caractérisé en ce que** le manteau (24) est coloré avec une teinte foncée.

14. Piège à insectes selon l'une quelconque des revendications 1 à 13, **caractérisé en ce que** l'appât comprend un distributeur de phéromones (31).

15. Piège à insectes selon la revendication 14, **caractérisé en ce que** le distributeur de phéromones (31) est monté dans l'ossature de support (11).
